# DEMANDE DE BREVET EUROPEEN

(11) **EP 0 945 255 A1**
(43) Date de publication de la demande: **29.09.1999**
(21) Numéro de dépôt: 99810246.1
(22) Date de dépôt: 19.03.1999
(51) Int. Cl.: B32B 21/02, E04C 2/16

(54) **Panneau composite à base de bois**

(30) Priorité: 27.03.1998 CH 9800727; 06.04.1998 FR 9804517
(71) Demandeur: Steiner, Vincent, 2000 Neuchâtel (CH)
(72) Inventeur: Steiner, Vincent, 2000 Neuchâtel (CH)
(74) Mandataire: Gresset, Jean

(57) **Abrégé**

L'invention concerne un panneau composite comportant une âme (10) et deux peaux (11, 12) entre lesquelles l'âme (10) est intercalée.

L'âme est formée d'un agglomérat de paille de bois et de liant, tandis que chacune des peaux est formée d'au moins deux feuilles (13, 14, 15) de bois collées l'une à l'autre et présentant une structure fibreuse orientée selon un axe sensiblement inscrit dans leur plan.

## Description

La présente invention concerne les panneaux composites et, plus particulièrement, les panneaux comportant une âme et deux peaux entre lesquelles l'âme est intercalée et collée. L'âme confère au panneau sa légèreté, sa résistance à la compression et sa rigidité, tandis que les peaux définissent sa résistance à la flexion, à l'impact et son aspect.

De tels panneaux sont utilisés pour la fabrication de cloisons ou de structures portantes, à cause de leurs qualités physiques et de leur coût avantageux. Les deux peaux sont généralement faites en bois croisé, alors que l'âme est en mousse de polyuréthanne ou de polystyrène, par exemple. Les âmes de ce type offrent une très bonne isolation thermique et phonique. De plus, leurs caractéristiques mécaniques sont très intéressantes, malgré la faible masse spécifique de l'ensemble. Malheureusement, le prix de ces mousses est élevé. Une telle structure est, par exemple, envisagée dans la demande de brevet FR 2 565 899.

ll a été aussi proposé de réaliser l'âme du panneau au moyen de particules agglomérées obtenues à partir du bois. Ainsi, dans la demande de brevet PCT/AU94/00412, on réalise tant l'âme que les peaux au moyen d'un mélange de résine et de matériau cellulosique. Ce dernier peut être fait de copeaux, de flocons, de fibres ou de particules de bois, agglomérés entre eux au moyen d'un liant, par exemple une résine de type mélanine formaldéhyde.

Le brevet EP 0 637 488 suggère de réaliser l'âme avec notamment du carton préalablement déchiqueté, les particules étant ensuite agglomérées au moyen de résine.

Des âmes en carton ou en copeaux agglomérés par un liant sont plus économiques que de la mousse de matière synthétique. Par contre, les caractéristiques physiques sont moins bonnes pour la plupart.

En outre, on relèvera que les panneaux tels que décrits ci-dessus ont une âme compacte ou comportant des pores fermés.

Un but de la présente invention est d'offrir un panneau composite particulièrement léger, de faible coût et faisant appel à une forte proportion de matériaux renouvelables. Pour atteindre ce but, le panneau selon l'invention, comportant une âme et deux peaux entre lesquelles l'âme est intercalée, est caractérisé en ce que l'âme est formée d'un agglomérat de paille de bois et de liant.

La présente invention a également pour but d'obtenir un panneau dont la résistance à la flexion est particulièrement bonne. A cet effet, les peaux entre lesquelles l'âme est intercalée sont formées d'au moins deux feuilles de bois collées l'une à l'autre et présentant chacune une structure fibreuse orientée selon un axe sensiblement inscrit dans le plan des feuilles.

Selon une variante particulièrement avantageuse, les axes de deux feuilles adjacentes forment entre eux un angle non nul.

La présente invention a aussi pour but de réaliser un panneau dans lequel les différentes parties sont assemblées de manière solide et économique. Ce but est atteint grâce au fait que la paille de bois et les feuilles sont imprégnées au moyen d'une résine qui assure, en outre, le collage des feuilles entre elles et de l'âme sur les peaux et constitue le liant de l'agglomérat.

L'aspect esthétique des panneaux peut jouer un rôle important selon les applications. Comme, dans certains cas, il n'est pas souhaitable que le bois soit apparent, le panneau peut alors comporter une feuille de matériau synthétique ou minéral collée sur la face externe de l'une au moins des peaux.

Afin d'obtenir des caractéristiques mécaniques encore meilleures, un panneau selon un mode d'exécution particulier de l'invention est renforcé par l'adjonction de fils réalisés en un matériau faiblement sensible à la température et à l'humidité, tel que du carbone, du verre ou toute substance synthétique habituellement utilisée pour l'armage de produits composites. Ces fils sont déposés sur l'une au moins des feuilles, soit par collage soit par imprégnation, au moyen d'un adhésif ou d'une résine époxy. Les fils sont orientés selon un ou plusieurs axes et peuvent avantageusement être structurés en tissu.

Un autre but de la présente invention est de réaliser un panneau permettant une circulation d'air dans son âme. Une telle structure évite la condensation et accélère le processus de fabrication. Ce but est atteint grâce au fait que l'âme présente une structure poreuse ouverte.

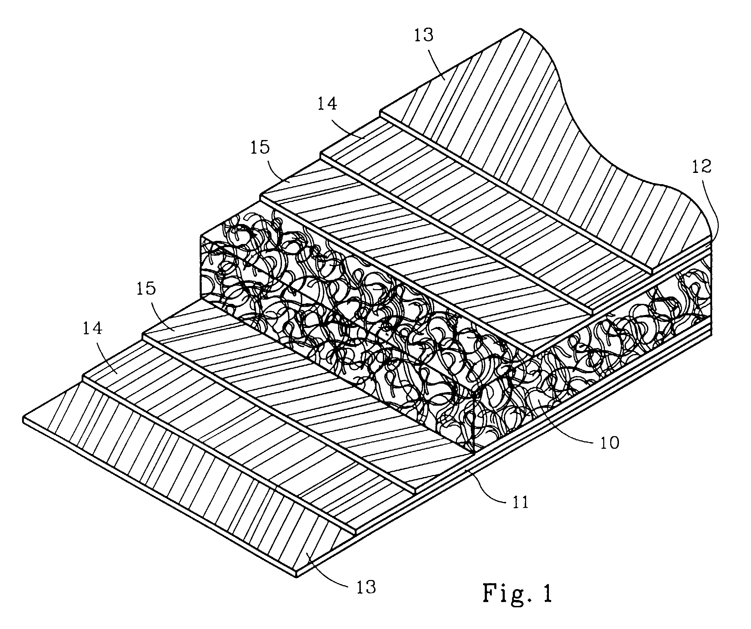

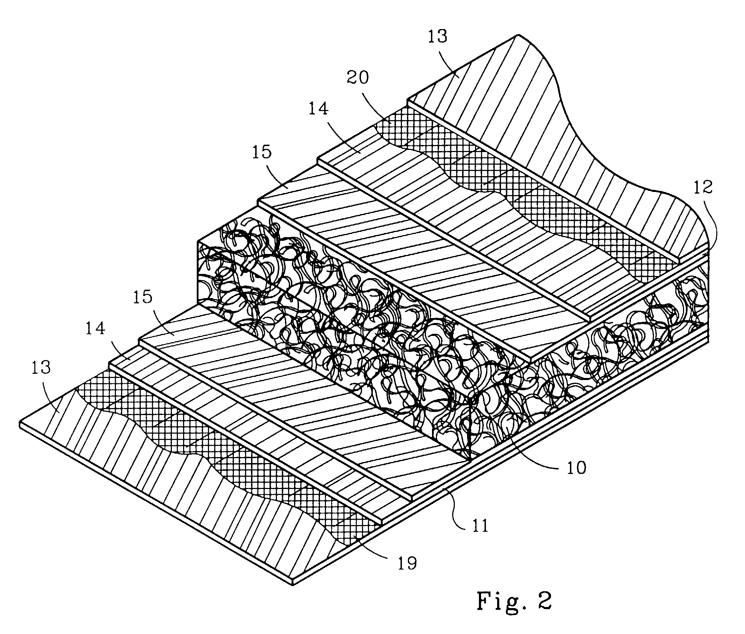

D'autres avantages et caractéristiques de l'invention ressortiront de la description détaillée qui va suivre, faite en regard du dessin annexé dans lequel les figures 1 et 2 représentent, en perspective, deux exemples de réalisation de panneaux selon l'invention, avec des feuilles partiellement arrachées.

Pour bien comprendre l'invention, il est tout d'abord nécessaire de préciser la définition des termes fibres de bois, copeaux et paille de bois.

Les fibres de bois sont obtenues en déchiquetant des troncs ou des branches pour obtenir des particules dont la longueur est beaucoup plus importante que les autres dimensions. Les fibres se présentent sous forme d'aiguilles sensiblement rectilignes. Une masse formée de fibres présente peu de souplesse.

Les copeaux sont des particules de bois ayant une largeur et une longueur sensiblement égales, pour une épaisseur beaucoup plus faible. Une masse formée de copeaux présente une souplesse légèrement supérieure à celle obtenue avec des fibres de bois.

La paille de bois est formée de bandes d'épaisseur et de largeur régulières et dont la longueur peut dépasser le mètre. Typiquement, l'épaisseur est en général inférieure au millimètre alors que la largeur est de l'ordre de quelques millimètres. La paille de bois offre une très grande élasticité. Elle est notamment utilisée pour l'emballage, assurant un remplissage efficace pour une masse spécifique faible.

Ainsi, la paille de bois permet de réaliser une âme de panneau composite ayant une masse spécifique particulièrement faible et présentant une porosité qui permet notamment une circulation d'air dans les interstices.

Le panneau représenté à la figure 1 comporte une âme 10 intercalée entre deux peaux 11 et 12.

L'âme 10 est faite en paille de bois, formée de rubans ayant une épaisseur de quelques dixièmes de millimètre à quelques millimètres, une largeur de quelques millimètres et une longueur se chiffrant en dizaines de centimètres, voire en mètres.

Le bois utilisé pour la fabrication de cette paille est avantageusement de type à longues fibres, comme le pin ou l'épicéa.

Les peaux 11 et 12 sont faites de plusieurs feuilles de bois collées entre elles, au nombre de trois dans l'exemple décrit et portant sur le dessin les mêmes références 13, 14 et 15.

La feuille extérieure 13 est en un bois choisi pour ses caractéristiques mécaniques et esthétiques. ll peut, par exemple, s'agir de hêtre, de chêne ou de bois exotique. En variante, cette feuille extérieure est réalisée en un matériau synthétique ou minéral.

Les feuilles 14 et 15 sont en un bois sélectionné pour ses caractéristiques mécaniques, car elles jouent un rôle important dans le comportement que présentera le panneau terminé.

L'épaisseur et l'orientation de chaque feuille sont définies de manière à optimiser les caractéristiques du panneau terminé, en fonction de son application. Typiquement, les peaux 11 et 12 ont une épaisseur comprise entre 3 et 12 mm.

Pour fabriquer un panneau tel que celui représenté à la figure 1, on commence par réaliser les peaux 11 et 12. A cet effet, les feuilles de bois sont imprégnées de résine, par immersion ou par projection. Elles sont ensuite superposées, avant que la résine ne soit polymérisée. Les feuilles sont ainsi assemblées les unes aux autres par collage, simultanément à l'opération d'imprégnation.

Les feuilles de bois utilisées ont chacune une épaisseur constante, allant de quelques dixièmes de millimètre à plusieurs millimètres. Elles ont été déroulées ou tranchées à partir d'un tronc, en veillant à ce que les fibres du bois soient sensiblement orientées dans le plan des feuilles. Lors de l'opération d'assemblage, on place les feuilles de manière que leurs fibres définissent entre elles un angle non nul, avantageusement compris entre 30 et 90°.

La paille de bois destinée à former l'âme 10 est imprégnée de résine puis étalée en une masse d'épaisseur sensiblement constante, de l'ordre de dix à cent millimètres, par exemple.

La peau 12 est ensuite placée sur l'âme 10, puis le panneau ainsi formé est compressé, durant la polymérisation de la résine, de manière à obtenir la densité souhaitée et assurer la cohérence de l'ensemble.

Ces différentes opérations peuvent être réalisées au moyen d'une chaîne de fabrication dans laquelle les différents composants sont traités puis assemblés les uns aux autres.

Le taux d'imprégnation de la paille de bois et la densité de l'âme constituent deux paramètres importants dans la réalisation de panneaux selon l'invention.

On conviendra que le taux d'imprégnation est la proportion des pores du bois ayant été obturés par la résine. Cette proportion correspond au rapport entre la quantité de résine absorbée par le bois et la quantité maximum susceptible d'être absorbée.

On conviendra, par ailleurs, que la densité de l'âme est le rapport entre le volume occupé par la paille de bois et le volume total disponible dans l'espace compris entre les deux peaux 11 et 12.

Le taux d'imprégnation de la paille de bois et la densité de l'âme peuvent varier de manière considérable en fonction de l'application du panneau. Si celui-ci est destiné à la fabrication de cloisons, par exemple, le taux d'imprégnation est généralement sensiblement plus faible que si le panneau est destiné à être soumis à des contraintes importantes.

A titre d'exemple, un panneau selon l'invention a été réalisé avec une âme de 20 mm et deux peaux de 3,5 mm, chacune formée de deux feuilles d'épicéa dont les axes définis par les fibres font entre eux un angle de 60°. La densité de l'âme est de 50% et le taux d'imprégnation de 50% également. Ce panneau présente une bonne rigidité tout en étant léger, ce qui lui confère une grande polyvalence.

Pour imprégner la paille et les feuilles, et pour assembler les différents constituants, on peut utiliser une résine de type époxy, celle par exemple vendue par la maison Sicomin (France) sous la référence SD 1300.

Durant les opérations d'imprégnation, la résine peut avantageusement être chauffée à une température de 40 à 50°C. Elle est ainsi plus fluide et pénètre mieux dans les pores du bois, tout en accélérant le processus de durcissement.

Avec une densité de l'ordre de 50%, l'espace libre subsistant définit une structure poreuse ouverte. On peut ainsi faire circuler un gaz dans l'âme du panneau, pour le chauffer ou le refroidir de l'intérieur, tant durant le processus de fabrication qu'à l'usage.

Dans la variante représentée à la figure 2, on retrouve l'âme 10 intercalée entre deux peaux 11 et 12.

La structure des peaux diffère de celle précédemment décrite du fait que des couches de fils 19 et 20 sont intercalées entre les deux feuilles de bois extérieures 13 et 14 de chacune des âmes 11 et 12. Dans l'exemple représenté au dessin, les fils sont tissés. Ils sont faits d'un matériau présentant une bonne stabilité à la température et à l'humidité, par exemple du verre, du carbone ou toute substance synthétique habituellement utilisée pour l'armage de produits composites. De la sorte, la stabilité des panneaux est considérablement augmentée, malgré le faible coût et la faible surépaisseur due à cette adjonction.

ll est aussi possible d'utiliser des fils alignés et orientés selon un ou plusieurs axes, mais non tissés.

Une très sensible amélioration des caractéristiques mécaniques est déjà obtenue avec une épaisseur de couches de fils représentant 1% de la section totale du panneau.

ll est également possible de fabriquer des panneaux de forme. A cet effet, on utilise un moule dont la structure correspond à la forme des panneaux à fabriquer. Après imprégnation des feuilles de bois, on les place dans le moule pour former les peaux en les soumettant à une forte pression durant la polymérisation de la résine. Elles sont ensuite extraites du moule et l'une est placée sur un support et garnie de paille de bois imprégnée de résine. Le tout est finalement recouvert de la seconde peau puis mis sous pression pour assurer l'assemblage des composants du panneau, de manière comparable au procédé antérieurement décrit.

## Revendications

1. Panneau composite comportant une âme (10) et deux peaux (11, 12) entre lesquelles l'âme (10) est intercalée et collée, caractérisé en ce que ladite âme (10) est formée d'un agglomérat de paille de bois et de liant.

2. Panneau selon la revendication 1, caractérisé en ce que chacune des peaux (11, 12) est formée d'au moins deux feuilles (13, 14, 15) de bois collées l'une à l'autre et présentant chacune une structure fibreuse orientée selon un axe sensiblement inscrit dans le plan desdites feuilles.

3. Panneau selon la revendication 2, caractérisé en ce que les axes de d deux feuilles adjacentes forment entre eux un angle non nul.

4. Panneau selon l'une des revendications 2 et 3, caractérisé en ce que la paille de bois formant l'âme (10) et les feuilles (13, 14, 15) sont imprégnées au moyen d'une résine qui assure, en outre, le collage desdites feuilles (13, 14, 15) entre elles et de l'âme (10) sur les peaux (11, 12), et constitue le liant dudit agglomérat.

5. Panneau selon l'une des revendications 1 à 4, caractérisé en ce qu'il comporte, en outre, une feuille de matériau synthétique ou minéral collée sur la face externe d'au moins l'une des peaux (11, 12).

6. Panneau selon l'une des revendications 1 à 5, caractérisé en ce qu'il comporte, en outre, une couche de fils (19, 29) en matériau faiblement sensible à l'humidité et à la température collée sur l'une au moins desdites feuilles (13, 14, 15).

7. Panneau selon la revendication 6, caractérisé en ce que lesdits fils (19, 20) sont en un matériau choisi parmi le carbone, le verre et toute substance synthétique habituellement utilisée pour l'armage de produits composites.

8. Panneau selon l'une des revendications 6 et 7, caractérisé en ce que lesdits fils définissent ensemble un tissu (19, 20).

9. Panneau selon l'une des revendications 1 à 8, caractérisé en ce que ladite âme (10) présente une structure poreuse ouverte.
